# EUROPEAN PATENT SPECIFICATION

(11) **EP 1 503 260 B1**
(45) Date of publication and mention of the grant of the patent: **18.10.2006**
(21) Application number: 04254408.0
(22) Date of filing: 23.07.2004
(51) Int. Cl.: G05B 19/18

(54) **Numerical control device**
Numerische Steuerungseinrichtung
Appareil à commande numérique

(30) Priority: 28.07.2003 JP 2003280920
(43) Date of publication of application: 02.02.2005
(73) Proprietor: FANUC LTD, Minamitsuru-gun, Yamanashi 401-0597 (JP)
(72) Inventor: Kochiya, Hideshi, Ebina-shi, Kanagawa, 243-0401 (JP); Endo, Takahiko, Kokubunji-shi, Tokyo 185-0005 (JP)
(74) Representative: Billington, Lawrence Emlyn

(56) References cited:
- EP-A- 0 385 459
- EP-A- 1 308 809
- US-A- 5 391 970
- PATENT ABSTRACTS OF JAPAN vol. 0170, no. 07 (P-1465), 7 January 1993 (1993-01-07) & JP 4 238504 A (FANUC LTD), 26 August 1992 (1992-08-26)

## Description

The present invention relates to a numerical control device, and more particularly to a numerical control device for synchronously controlling a plurality of axes.

When performing axis control by means of a numerical control device, there are cases where synchronous control is executed on a plurality of axes in rotating machines, packaging machines, painting machines and the like (see, for example, Japanese patent Application Laid-Open No, 2001-27904 A).

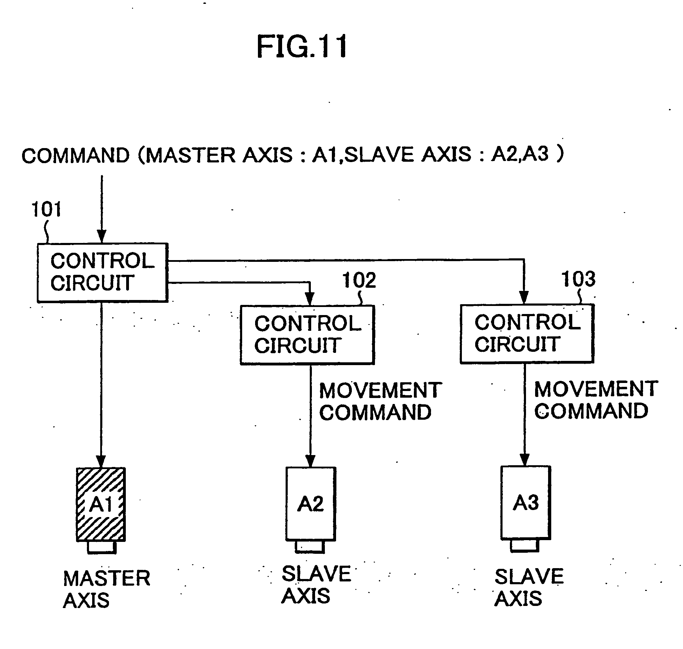

Fig. 11 is a conceptual diagram for explaining an outline of synchronous control to be executed by a conventional numerical control device.

In synchronous control where an axis is synchronized to another axis, a master axis (base axis) and slave axes (synchronized axes) are set, the master axis is controlled, and the control of the slave axes is synchronized with the control performed on the master axis. In Fig. 11, in a system constituted by a plurality of axes A1 through A3, commands are given to the master axis and the slave axes by means of a program, parameters, signals and the like. Here, A1 is the master axis and A2, A3 are the slave axes. In this way, after the relationship between the master axis and the slave axes is set, a command is given to a control circuit 101 of the master axis, whereby the master axis is controlled. The command for the master axis is transmitted to control circuits 102, 103 to synchronously control the slave axes A2, A3.

Conventionally, in synchronous control of a multi-system numerical control device, when synchronously controlling a set of master axis and slave axes in any one of the plurality of systems, if the master axis is not under the control of a command system, although the slave axes are under the control of the command system, then it is necessary to place the master axis under the control of the command system so as to give commands to the master axis.

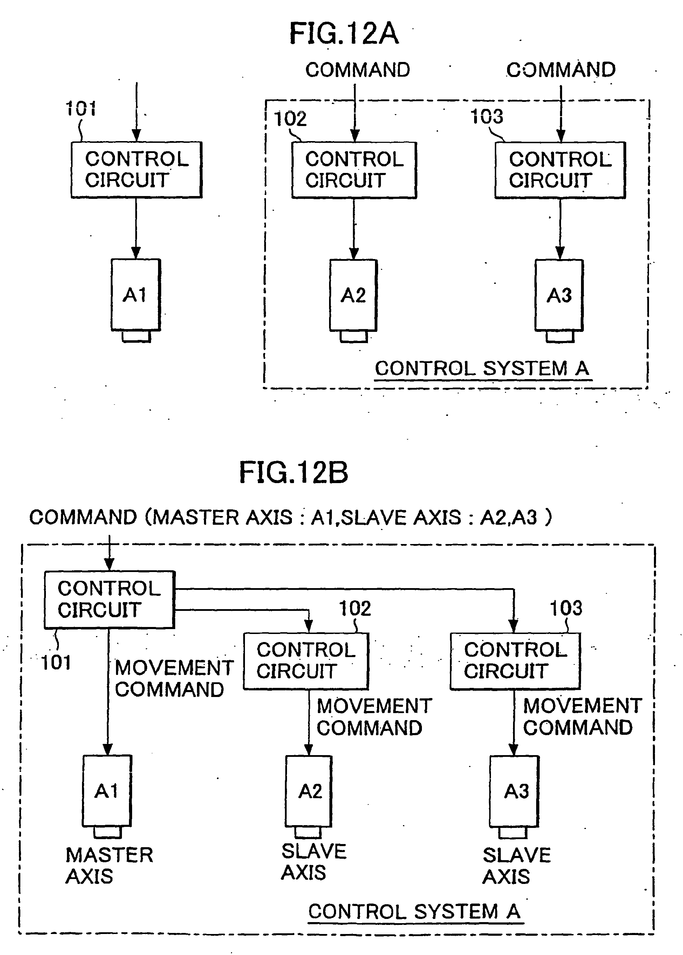

Fig. 12A and Fig. 12B are conceptual diagrams for explaining settings for the synchronous control by the conventional numerical control device.

In Fig. 12A, the axis A1 and the control circuit 101 are shown in a state where they are not under the control of a control system A, which includes axes A2, A3 and control circuits 102, 103. In this state, the axis A2 and the axis A3 cannot be synchronously controlled with the axis A1. In order to synchronously control the axis A2 and the axis A3 with the axis A1 by means of a command from the control system A, the axis A1 must be placed under the control of the control system A like the axis A2 and the axis A3, and furthermore, commands must be given to the master axis A1 and also to the slave axes A2, A3.

In a synchronous control by the conventional numerical control device, a superior/inferior relationship is set between the axes to be synchronously controlled, and a movement command is first given to the main axis (master axis), and then a movement command is given from the master axis to the axes (slave axes) which is in the inferior relationship, thus restricting the relationships between each of the axes.

Therefore, in the programs, parameters, signals and the like, it is necessary to state commands for deciding the relationships among these axes, causing problems in that the programs and the like become complicated, and the cycle time for executing a synchronous control becomes long.

Furthermore, even in the case where settings for each of the axes are changed, such as the case where a master axis command system is changed, it is still necessary to change the programs, parameters, signals and the like, thus complicating and lengthening the controls to be performed by a numerical control device.

US-A-5,391,970 provides a prior example of a numerical control device according to the preamble of attached claim 1, wherein master and slave axes can be designated differently in a control system. However, there is no disclosure or suggestion that the designation "master" and "slave" is applied to a synchronously-controlled axis within the synchronous control means itself purely in dependence upon which axis receives a movement command. Thus, although motion controllers may be flexibly reconfigured as is required for some processes where at certain times master axes revert to slave axes, there is no disclosure or hint that this flexible reconfiguration occurs for any case other than where the overall operation of the controlled system requires.

Also, EP-A-1 308 809 and JP 4 238504 A disclose master and slave numerical control devices, although again no disclosure or suggestion of the present invention is made therein.

According to the present invention there is provided a numerical control device according to attached claim 1.

The present invention, in synchronous controls performed by a numerical control device, eliminates restrictions in which a command to a master and/or slave is primary, as in the conventional numerical control device. Rather, a command to any axis can be treated as a synchronous command to allow synchronous control to be executed, thereby resolving problems such as the complication of program, parameter, signal and other commands and the lengthening of the cycle time of synchronous control and the like, due to restrictions set among the axes.

The numerical control device of the present invention is provided with synchronous control means that, based on a movement command to a master axis, moves one or more slave axes in synchronization with the master axis. The synchronous control means of the present invention is provided with: synchronous control object setting means for determining a plurality of axes to be synchronously controlled; synchronous control processing means for providing a movement command to a plurality of axes to be synchronously controlled; and synchronous control command axis determining means which sets one axis for which the movement command was given by a processing program or by a signal as a master axis in the synchronous control in association with the current movement command, and also sets axes other than the master axis among the plurality of axes to be synchronously controlled as slave axes in the synchronous control in association with the movement command.

In the synchronous control object setting means, the axes to be synchronously controlled may be set beforehand and stored in storage means, or may be set each time the synchronous control is executed by a numerical control device.

When storing the axes to be synchronously controlled in the storage means, the axes to be controlled in synchronization with the axis designated by the movement command stated in a processing program or a signal may be read out from among the stored synchronous control objects. On the other hand, when setting the axes to be synchronously controlled in the course of numerical control, the axes to be controlled in synchronization with the axis under numerical control may be set by means of input means or the like.

Synchronous control command axis determining means may set one of the axes for which a movement command is given by using the processing program or signal as a master axis in the synchronous control in association with the movement command, and may also set the axes other than the master axis among the plurality of axes to be synchronously controlled, set by the synchronous control obj ect settingmeans, as slave axes in the synchronous control in association with the movement command. Since the synchronous control command axis determining means determines, for each movement command, the axes designated in the movement command as a master axis and slave axes in association with the movement command, it is unnecessary to designate, for each synchronous control, a master axis and slave axes in a processing program, signal or parameters.

Based on the relationship between the master axis and the slave axes determined by the synchronous control command axis determining means, synchronous control processing means sends the movement command to each axis to be synchronously controlled. The movement command given by the processing program or command is transmitted to the master axis, among the axes to be synchronously controlled, and movement commands that were copied from the movement command are transmitted to the slave axes. Here, since each of the axes to be synchronously controlled perform the same operations, it is not necessary to distinguish between the master axis and the slave axes, and the movement command given by the processing program or command may be given to any of the axes. Therefore, the names "master axis" and "slave axis" are given merely for convenience. The master axis and the slave axes need not be clearly designated, and may be set as desired.

In synchronous control processing by the synchronous control processing means, storage means may be used as synchronous control object setting means, and movement commands given to the axis designated by the movement command and axes read out from the storage means, whereby synchronous control can be performed automatically. Synchronous control can also be performed manually by using input means as synchronous control object setting means to give movement commands to the axes designated by the movement command and by the input means.

The numerical control device of the present invention can be further provided with synchronous control command axis switching means. The synchronous control command axis switching means switches the axes for which the movement command is to be given first while executing the synchronous control. The switching of the axes can be performed by means of processing programs, parameters or signals.

When the synchronous control command axis switching means receives a subsequent movement command for an axis other than the current master axis, among a plurality of axes to be synchronously controlled, during execution of the synchronous control, it automatically switches the master axis in the synchronous control in association with the subsequent movement command to the axis for which the subsequent movement command was given.

By using this synchronous control command axis switching means, the combination of axes to be synchronously controlled can be changed by simply changing the content of the processing program or the parameter values or the signals. For example, the axes to be synchronously controlled can be changed by designating the axis to which a subsequent movement command is given, to an axis which is not included in the synchronous control objects under currently synchronized control but included in the other synchronous control objects,.

Furthermore, the numerical control device of the present invention can be further provided with synchronous/asynchronous switching means.

The synchronous/asynchronous switching means switches between a synchronization mode for performing the synchronous control, and an asynchronous mode where the synchronous control is not performed, by means of the processing program, the parameters or the signals. The synchronous/asynchronous switching means enables switching between the synchronous control and asynchronous control, by simply_changing the processing program, the parameters or the signal.

Furthermore, the numerical control device of the present invention can also be provided with synchronous operation group control means. The synchronous operation group control means is an operations group constituted by a plurality of axes including a plurality of axes which operate synchronously.

The synchronous operation group control means gives the movement command to any one axis in each of the synchronous operation groups, to synchronously control each of the synchronous operation groups independently. Therefore, by giving the movement command to only one axis in each synchronous operation group among the plurality of synchronous operation groups, each of the synchronous operation groups can be synchronously controlled independently.

In accordance with the present invention, the programs, parameters, signals and other commands for causing a numerical control device to execute synchronous control are simplified, thus facilitating the control by the numerical control device. Furthermore, the cycle time of the synchronous control by the numerical control device can be shortened.

The foregoing and other feature of embodiments of the invention will become apparent from the following preferred embodiments of the invention with reference to the accompanying drawings, in which:
Fig. 1 is a diagram for explaining a first embodiment of a numerical control device according to the present invention;
Fig. 2 is a flowchart for explaining operations of the numerical control device in Fig. 1;
Fig. 3 is a diagram from explaining a second embodiment of a numerical control device in accordance with the present invention;
Fig. 4 is a flowchart for explaining operations of the numerical control device shown in Fig. 3;
Fig. 5 is a diagram for explaining a third embodiment of a numerical control device according to the present invention;
Fig. 6 is a flowchart for explaining operations of the numerical control device shown in Fig. 5;
Fig. 7 is a diagram for explaining a fourth embodiment of a numerical control device in accordance with the present invention;
Fig. 8 is a diagram for explaining a fifth embodiment of a numerical control device in accordance with the present invention;
Fig. 9 is a diagram for explaining a sixth embodiment of a numerical control device in accordance with the present embodiment;
Fig. 10 is a diagram for explaining a seventh embodiment of a numerical control device in accordance with the present invention;
Fig. 11 is a diagram for explaining an outline of synchronous control according to a conventional numerical control device; and
Fig. 12A and Fig. 12B are outline diagrams of settings for synchronous control in accordance with the conventional numerical control device.

### DETAILED DESCRIPTION OF THE PREFERRED EMBODIMENTS

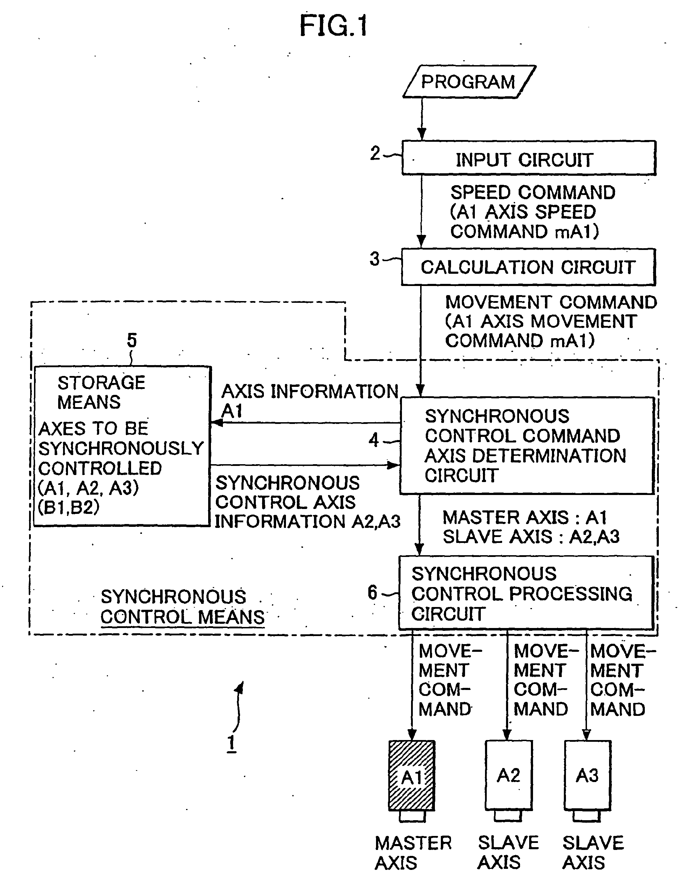

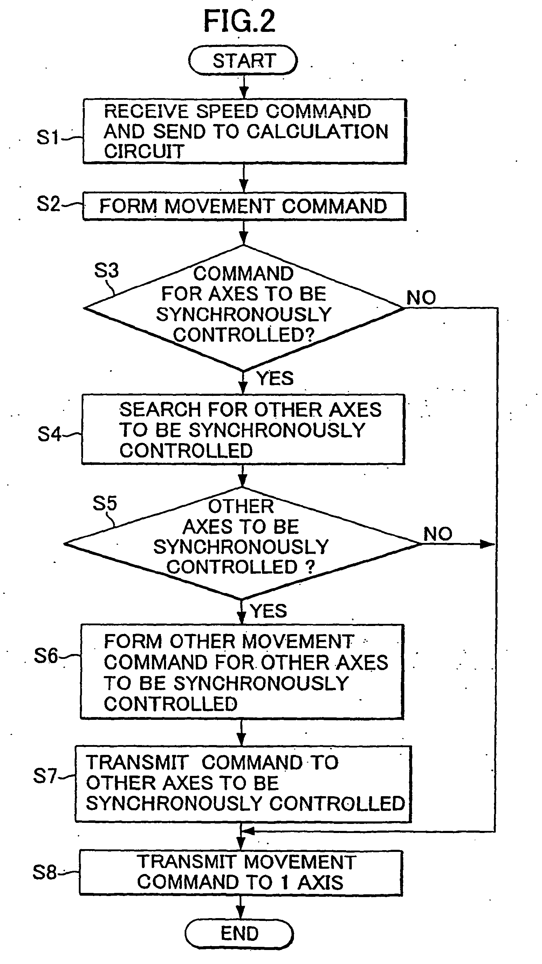

First, a first embodiment of a numerical control device according to the present invention is explained with reference to Fig. 1 and Fig. 2. Fig. 1 shows only the components relating to synchronous control, among the components a numerical control device comprises, and other components are omitted from the drawing.

According to this first embodiment, a speed command is given to one axis among a plurality of axes to be synchronously controlled, and the synchronous control is performed based on this speed command.

A numerical control device 1 is provided with an input circuit 2, a calculation circuit 3, a synchronous control command axis determination circuit 4, storage means 5, and a synchronous control processing circuit 6. The synchronous control command axis determination circuit 4, the storage means 5 and the synchronous control processing circuit 6 constitute synchronous control means, which synchronously control a plurality of axes (A1, A2, A3). Here, as the axes to be synchronously controlled, the axes A1, A2 and A3 are shown. However, the number of axes to be synchronously controlled is not limited to three, and any number of axes may be used.

Here, the input circuit 2 is input means for inputting a program or signal. A speed command that is stated in the program or signal is read, and the read speed command is sent to the calculation circuit 3. As an example, in a case where a speed command vA1 is set for the axis A1, the calculation circuit 3 receives this speed command vA1 and converts the command to a movement command mA1 for driving each motor.

The synchronous control command axis determination circuit 4 receives the movement command mA1 from the calculation circuit 3, and determines whether or not the movement command is for the axis to be synchronously controlled. This determination is performed based on information on axis to be synchronously controlled stored in the storage means 5. Information about the relationships of the axes that are to be synchronously controlled has been stored in the storage means 5 beforehand. For example, in the case where the synchronous control is performed for a plurality of axes (A1, A2, A3), these axes are stored as axes to be synchronously controlled.

The synchronous control command axis determination circuit 4 obtains the information on axes to be synchronously controlled from the storage means 5, and determines whether or not the movement command is for axes to be synchronously controlled. For example, in a case where the received movement command mA1 is a movement command for the axis A1, the information on the axis A1 is used to obtain, from the storage means 5, axes information on the axes A2, A3 to be synchronously controlled, and it is determined that the movement command is for the axes to be synchronously controlled. On the other hand, when no information on the axes to be synchronously controlled can be obtained, it is determined that the movement command is not for the axis to be synchronously controlled.

When the synchronous control command axis determination circuit 4 determined that the movement command is for the axis to be synchronously controlled, the axis for which the movement command was given is recognized as a master axis, and other axes to be synchronously controlled are recognized as slave axes.

The synchronous control processing circuit 6 receives the information on the axis to be synchronously controlled, which contains the movement command and the relationship between the master axis and the slave axes, from the synchronous control command axis determination circuit 4.

A movement command in which synchronous control is not designated is sent as it is to the designated axis.

Fig. 2 is a flowchart for explaining operations of the numerical control device in accordance with the first embodiment. The input circuit 2 receives a speed command described in a program or a signal, and sends the speed command to the calculation circuit 3 (step S1). The calculation circuit 3 converts the speed command to the movement command (step S2).

The synchronous control command axis determination circuit 4 determines whether or not the axis (the axis A1 in Fig. 1) for which the movement command is the axis to be synchronously controlled. This determination can be performed based on the information on axis to be synchronously controlled stored in the storage means 5 (step S3). In the case where the axis is the axis to be synchronously controlled, the other axes to be synchronously controlled (the axis A2, A3 in Fig. 1) that are synchronous control objects are searched. This search can be performed based on the information on axis to be synchronously controlled stored in the storage means 5 (step S4).

In the case where there is another axis to be synchronously controlled (step S5), the axis (the axis A1 in Fig. 1) for which the movement command was set becomes a master axis, and the other axes to be synchronously controlled (the axes A2, A3 in Fig. 1) become slave axes.

The synchronous control processing circuit 6 obtains the movement command, and the relationship between the master axis and the slave axes, from the synchronous control command axis determination circuit 4, and forms movement commands for the slave axes. The formation of the slave axis movement command can be performed by copying the master axis movement command (step S6).

The synchronous control processing circuit 6 transmits the movement commands to the axis (the axis A1 in Fig. 1) for which the movement command was given and to the other axes to be synchronously controlled, respectively. Accordingly, the axes to be synchronously controlled are synchronously controlled (steps S7, S8).

When there is no command for the axes to be synchronously controlled, or when there are no axes to be synchronously controlled, at steps S3, S5, the movement command is transmitted to the object for which the movement command is given (step S8).

In this first embodiment, an axis to be synchronously controlled can be changed by simply changing the setting of axis in the program or signal. Furthermore, even if the axis set in the program or signal is changed to another axis, similar synchronous control can be performed as far as these axes are within the same group of axes to be synchronously controlled.

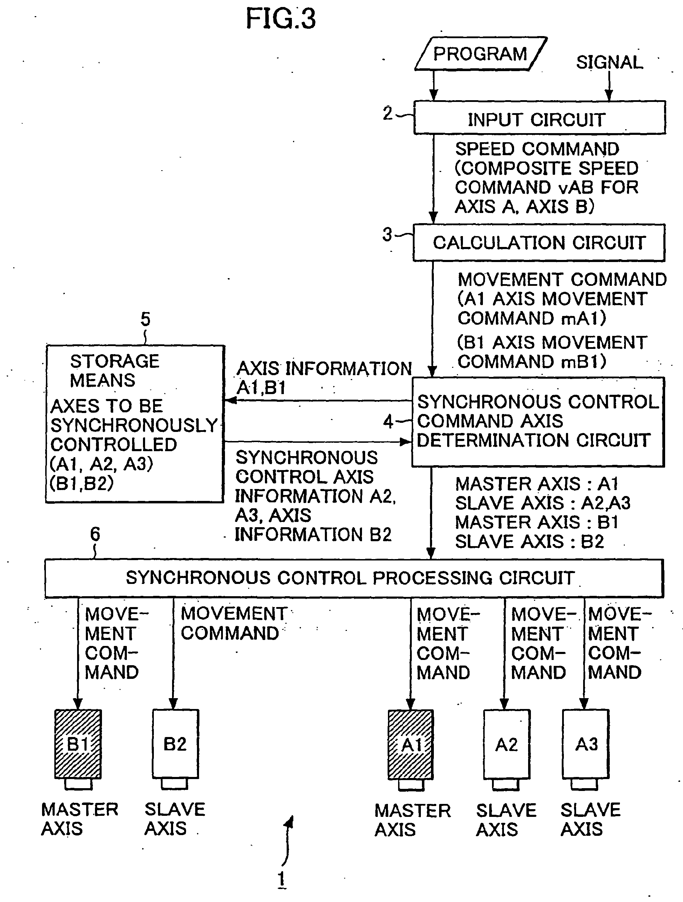

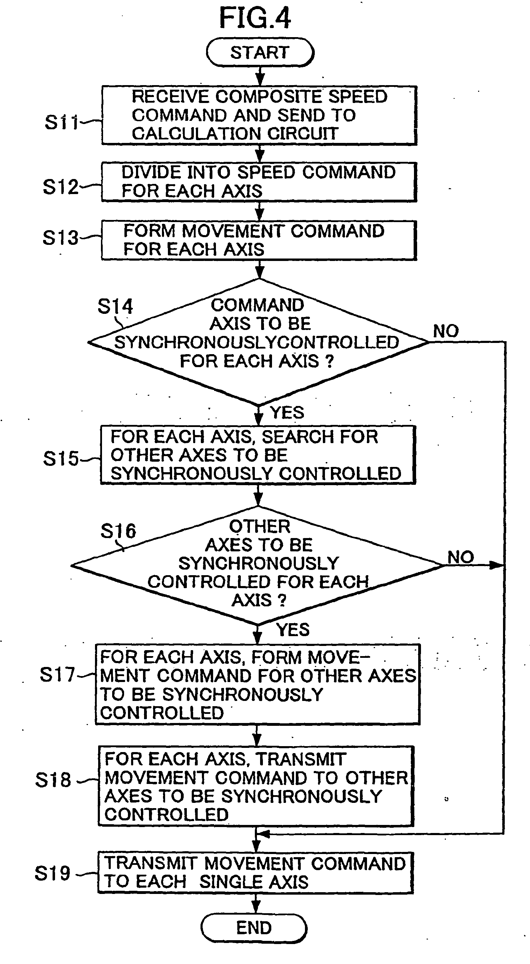

Next, a second embodiment of a numerical control device according to the present invention is explained with reference to Fig. 3 and Fig. 4. Fig. 3 shows only the components relating to synchronous control, among the components a numerical control device comprises, and other components are omitted from the drawing.

According to the second embodiment, a composite speed command is given to a plurality of axes to be synchronously controlled for executing a synchronous control.

The numerical control device 1 of the present embodiment has a structure similar to that of the first embodiment, including synchronous control command axis determination circuit 4, storage means 5 and synchronous control processing circuit 6, which constitute synchronous control means for synchronously controlling a plurality of axes (A1, A2, A3), (B1, B2). Axes A1, A2, A3 and axes B1 and axis B2 are shown here as axes to be synchronously controlled, however, axes to be synchronously controlled are not restricted to these. Any freely chosen number of axes and freely chosen combination may be used.

Here, the input circuit 2 serves as input means for inputting programs or signals. The speed command described in a program or signal is read, and the speed command that was read is sent to the calculation circuit 3. In a case where the speed command is set as a composite speed command vAB for the axis A and the axis B, the calculation circuit 3 receives the speed command vAB and divide it into speed commands vA1, vB1, and then further converts these speed commands into movement commands mA1, mB1 for driving each of the motors vA1, vB1.

The synchronous control command axis determination circuit 4 receives the movement commands mA1, mB1 from the calculation circuit 3, and determines whether or not the movement commands are for the axes to be synchronously controlled. This determination is performed based on the information on axis to be synchronously controlled stored in the storage means 5. Information about the relationships of the axes that are to be synchronously controlled has been stored in the storage means 5 beforehand. For example, in the case where the synchronous control is to be performed for a plurality of axes (A1, A2, A3) and (B1, B2), information about the relationships of these axes is stored.

The synchronous control command axis determination circuit 4 obtains information about the axes to be synchronously controlled from the storage means 5, and determines whether or not the movement command is for the axis to be synchronously controlled. In a case where the received movement command mA1 is the movement command for the axis A1, and the received movement command mB1 is the movement command for the axis B1, the axis information about the axis A1 is used to obtain, from the storage means 5, the axis information about the axes A2 and A3 which are to be synchronously controlled. Furthermore, the axis information about the axis B1 is used to obtain, from the storage means 5, the axis information about the axis B2 which is to be synchronously controlled, and it is determined that the movement commands are for the axes to be synchronously controlled. In the case where information on axes to be synchronously controlled cannot be obtained, it is determined that the movement command is not for the axis to be synchronously controlled.

The synchronous control command axis determination circuit 4, having determined that the movement commands were for the axes to be synchronously controlled, recognizes the master axes as the axes (A1, B1) for which the movement commands were given, and recognizes the other axes to be synchronously controlled (A2, A3, B2) as the slave axes.

The synchronous control processing circuit 6 receives the movement command and the information about the master axis and the slave axes from the synchronous control command axis determination circuit 4, and transmits the movement commands to the master circuit and the slave circuit. On the other hand, a movement command in which synchronous control is not designated is transmitted just as it is to the designated axis.

Fig. 4 is a flowchart for explaining operations of the numerical control device according to the second embodiment. The input circuit 2 receives a composite speed command that is described in the program or circuit or parameters, and sends the composite speed command to the calculation circuit 3 (step S11). The calculation circuit 3 divides the composite speed command into speed commands for each axis (step S12), and converts the speed commands into movement commands for each axis (step S13).

The synchronous control command axis determination circuit 4 determines whether or not the axes that are the objects of the movement command (the axis A1 and the axis B1 in Fig. 3) are the axes to be synchronously controlled. This determination can be performed based on the information on axis to be synchronously controlled stored in the storage means 5 (step S14). In the case where the object axes are the axes to be synchronously controlled, the other axes to be synchronously controlled that are the objects of the synchronous control (the axis A2, the axis A3 and the axis B2 in Fig. 3) are searched. This search can be performed based on the information on axis to be synchronously controlled stored in the storage means 5 (step S15).

In the case where other axes to be synchronously controlled do exist (step S16), the axis for which the movement command is set (the axis A1 and the axis B1 in Fig. 3) become the master axes, and the other axes to be synchronously controlled (the axis A2 and the axis A3 in Fig. 3) become the slave axes.

The synchronous control processing circuit 6 obtains the movement commands and information about the relationship between the master axis and the slave axes from the synchronous control command axis determination circuit 4, and forms the movement command for the slave axes. The formation of the movement command for the slave axes can be performed by copying the movement command for the master axes (step S17). The synchronous control processing circuit 6 transmits the movement commands to the single axes that are the objects of the movement command (the axis A1 and the axis B1 in Fig. 3) and to the other axes to be synchronously controlled. Accordingly, the axes to be synchronously controlled are synchronously controlled (step S18, S19).

When there is no command for the synchronous control objects, or when no axes to be synchronously controlled exist, at steps S14, S16, the movement commands are transmitted to the objects for which the movement commands are to be given (step S19).

According to the second embodiment, axes to be synchronously controlled can be changed by simply changing the axis settings in the composite speed command in the program or the signal. Furthermore, even if the axis set in the program or signal is changed to another axis, similar synchronous control can be performed as far as these axes are within the same group of axes to be synchronously controlled.

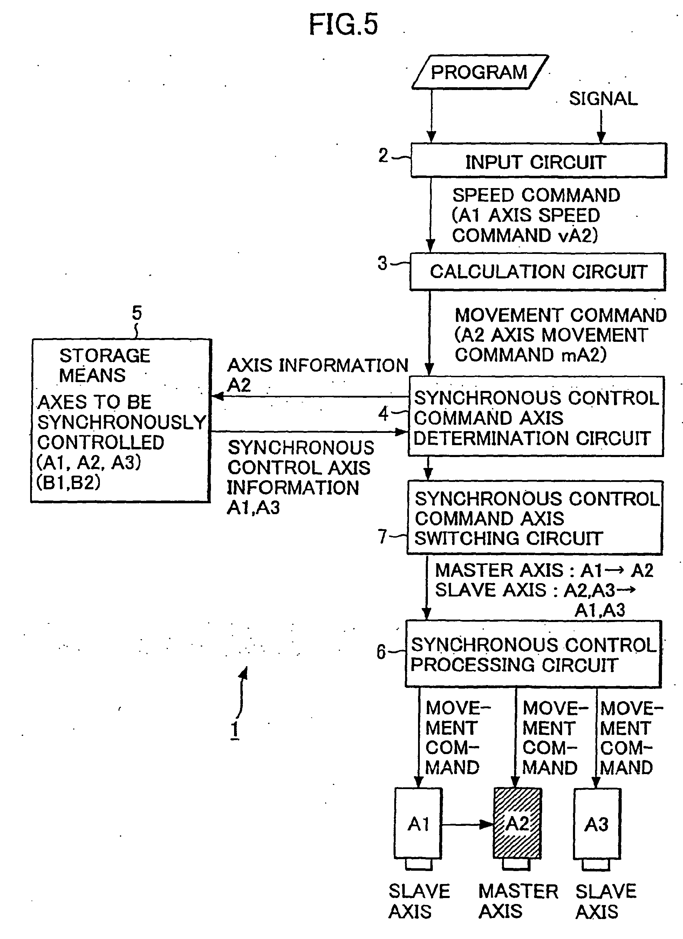

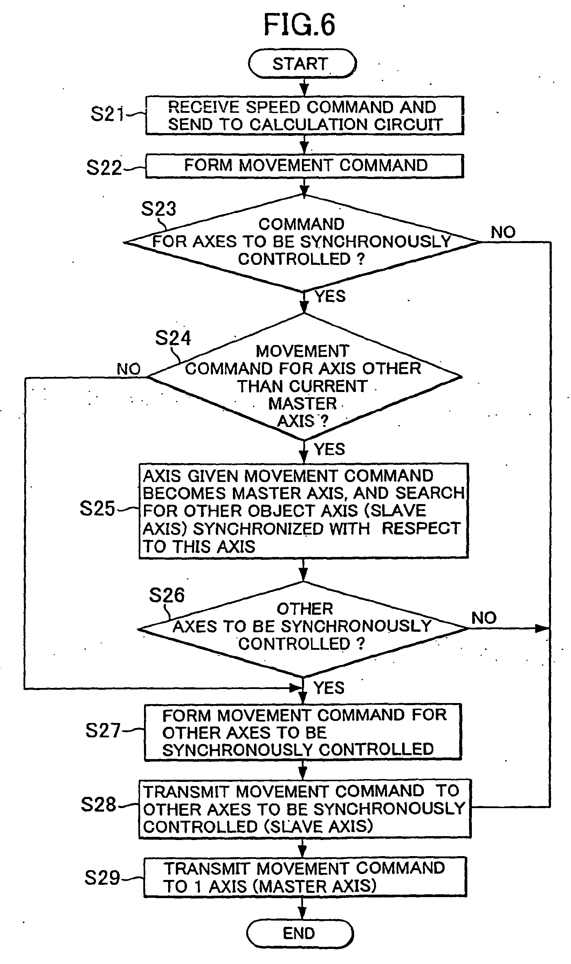

Next, a third embodiment of a numerical control device according to the present invention is explained with reference to Fig. 5 and Fig. 6. Fig. 5 shows only the components relating to synchronous control, among the components a numerical control device comprises, and other components are omitted from the drawing.

According to the third embodiment, a synchronous control command axis switching circuit 7 is added to the configuration of the first embodiment, thereby switching the axis for which movement command is to be given in the course of synchronous control. In the example shown in Fig. 5, the synchronous control command axis switching circuit 7 is provided between the synchronous control command axis determination circuit 4 and the synchronous control processing circuit 6. The synchronous control command axis determination circuit 4, the storage means 5, the synchronous control processing circuit 6 and the synchronous control command axis switching circuit 7 constitute the synchronous control means that synchronously controls a plurality of axes (A1, A2, A3). In this case, the axes A1, A2 and A3 are shown as the axes to be synchronously controlled, but the number of axes to be synchronously controlled is not limited to three, and any number of axes may be used.

When the axis for which the movement command inputted via a programor signal is given is changed, the synchronous control command axis switching circuit 7 switches the axis to which the movement command is given according to the change.

Since other structures can be made similar to those corresponding to the first embodiment, explanations thereof are omitted here.

Fig. 6 is a flowchart for explaining operations during a synchronous control processing in a numerical control device according to the third embodiment.

When the input circuit 2 receives the speed command described in the program or signal or parameter during the synchronous control processing, the speed command is then sent to the calculation circuit 3. Here, it is assumed that speed command during the synchronous control is speed command vA1 for the axis A1, and speed command newly added is a speed command vA2 for the axis A2 (step S21). The calculation circuit 3 converts the speed command vA2 for the axis A2 into a movement command to obtain movement command mA2 (step S22).

The synchronous control command axis determination circuit 4 determines whether or not the axis that is an object of movement command (the axis A2 in Fig. 5) is the axis to be synchronously controlled, based on the information on axis to be synchronously controlled stored in the storage means 5 (step S23). When the movement command is for the axis to be synchronously controlled, then it is determined whether or not the given movement command is for the axis other than the master axis which is an object of current synchronous control (step S24).

In the case where the movement command is for the axes other than the master axis for which synchronous control is currently performed, other axes to be synchronously controlled for which the movement command was not given (the axis A1, the axis A3 in Fig. 1) are searched from among the axes to be synchronously controlled. Here, the axis for which the movement command was given corresponds to the new master axis, and the other axes to be synchronously controlled correspond to the slave axes. This search may be performed based on the information on axis to be synchronously controlled stored in the storage means 5 (step S25).

At step S25, if other axes to be synchronously controlled were found (step S26), then the synchronous control command axis switching circuit 7 switches the master axis to the axis for which the movement command was set (the axis A2 in Fig. 5), and switches the slave axes to the other axes to be synchronously controlled (the axis A1 and the axis A3 in Fig. 5).

The synchronous control processing circuit 6 obtains the movement command and the information about the relationship between the master axis and the slave axes, from the synchronous control command axis determination circuit 4, and forms the movement command for the slave axes. The formation of the movement commands for the slave axes can be performed by copying the movement command for the master axis (step S27). The synchronous control processing circuit 6 transmits the movement commands to the single axis that is the object of the movement command (the axis A1 in Fig. 5), and to the other axes to be synchronously controlled, respectively, thereby synchronously controlling the axes to be synchronously controlled (step S28, S29).

When there is no command for the synchronous control objects at steps S23 and S26, or when no axes to be synchronously controlled exists, the movement commands are transmitted to the objects for which the movement commands are to be given (step S29).

Furthermore, in the case where the movement command is for the current master axis, similar movement commands are formed for the other axes to be synchronously controlled (step S27), and the movement commands are sent to the single axis that is the object of the movement command (the axis A1 in Fig. 5), and to the other axes to be synchronously controlled, respectively (step S28, S29)

According to the third embodiment, even during the synchronous control, the axis for which the movement command is given can be changed by simply changing axis settings to be performed by means of program or signal.

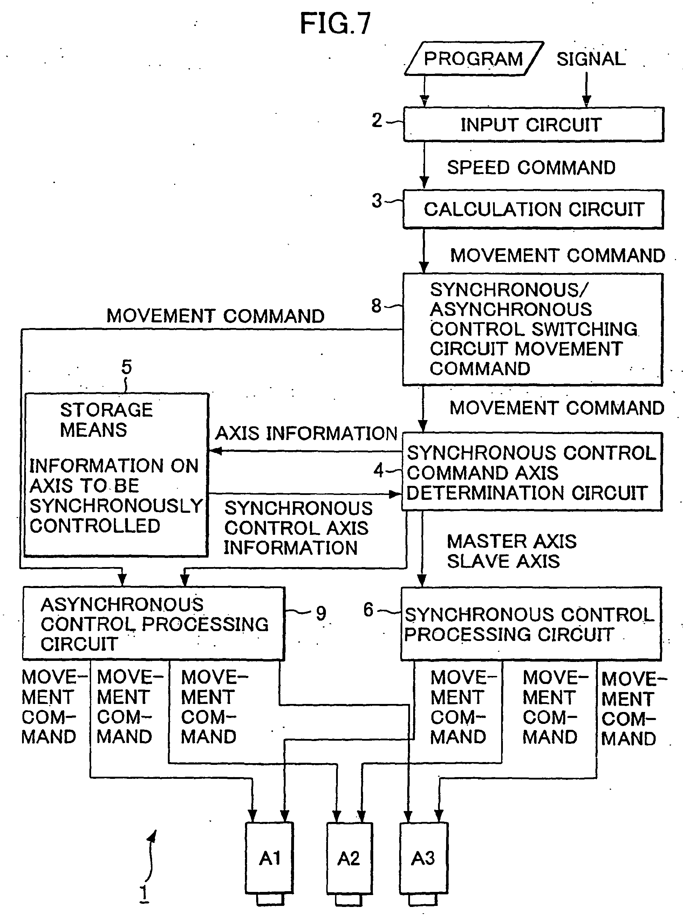

Next, a fourth embodiment of a numerical control device according to the present invention is explained with reference to Fig. 7. Fig. 7 shows only the components relating to synchronous control, among the components a numerical control device comprises, and other components are omitted from the drawing.

The fourth embodiment switches between a synchronous control mode in which synchronous control is performed, and an asynchronous control mode in which synchronous control is not performed. The present embodiment is provided with a synchronous/asynchronous control switching circuit 8, in addition to the structures of the first embodiment. In the example shown in Fig. 7, the synchronous/asynchronous control switching circuit 8 is provided at the precedent stage of the synchronous control command axis determination circuit 4. The synchronous control command axis determination circuit 4, the storage means 5 and the synchronous control processing circuit 6 constitute the synchronous control means that synchronously controls a plurality of axes. Here, the axes A1, A2 and A3 are shown as axes to be synchronously controlled, but the number of axes to be synchronously controlled is not restricted to three, and any number of axes may be used.

The synchronous/asynchronous control switching circuit 8 sends the given movement command to an asynchronous control processing circuit 9 in a case where asynchronous command content is designated in a movement command inputted via a program or signal. This asynchronous control processing circuit 9 drives each of the axes based on the received movement commands. On the other hand, in a case where asynchronous command content is not designated in a movement command inputted via aprogramor signal, the given movement command is sent to the synchronous control command axis determination circuit 4, similarly to the first embodiment, and the respective axes are synchronously controlled by the synchronous control processing circuit 6.

Furthermore, the synchronous control command axis determination circuit 4 may also have a function of synchronous/asynchronous control switching. When the synchronous control command axis determination circuit 4 determines that the movement command inputted via a program or signal is not for synchronous control but for asynchronous control, the movement command is sent to the asynchronous control processing circuit 9 to asynchronously control the indicated axe.

Since other structures can be made similar to those corresponding to the first embodiment, explanations thereof are omitted here.

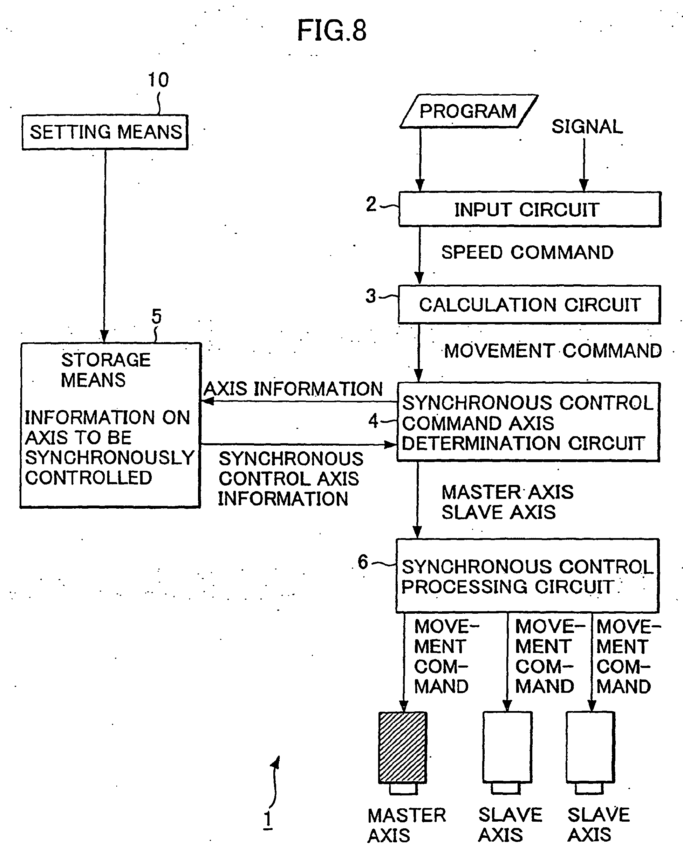

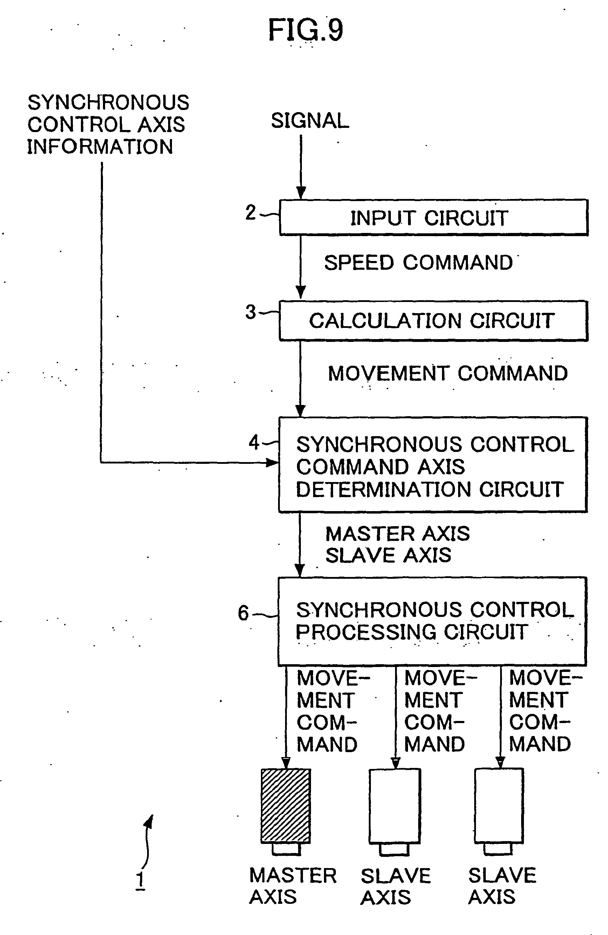

Next, a fifth and a sixth embodiments of a numerical control device according to the present invention is explained with reference to Fig. 8 and Fig. 9. Fig. 8 and Fig. 9 show only the components relating to synchronous control, among the components a numerical control device comprises, and other components are omitted from the drawing.

In the fifth and the sixth embodiments, axes to be an object of synchronous control are set. In the fifth embodiment (shown in Fig. 8), the storage content in the storage means is set. In the sixth embodiment (shown in Fig. 9), an external signal is used to instruct the settings to the synchronous control command axis determination circuit.

The fifth embodiment is provided with setting means 10, in addition to the structures of the first embodiment. The setting means 10 writes or rewrites, into the storage means 5, information on axes to be synchronously controlled, thereby setting the axes to be synchronously controlled. The synchronous control command axis determination circuit 4 refers to the information on axis to be synchronously controlled that is stored in the storage means 5, thus performing synchronous control automatically.

On the other hand, in the sixth embodiment, using the structures of the first embodiment, synchronous control axis information is inputted into the synchronous control command axis determination circuit 4 from outside, whereby setting the axes to be synchronously controlled. The synchronous control command axis determination circuit 4 refers to the inputted information on axis to be synchronously controlled. The information on axis to be synchronously controlled can be inputted by an external device in the course of synchronous control operations, or by manual operations. In case of manual input, synchronous control can be performed automatically.

Since other structures can be made similar to those corresponding to the first embodiment, explanations thereof are omitted here.

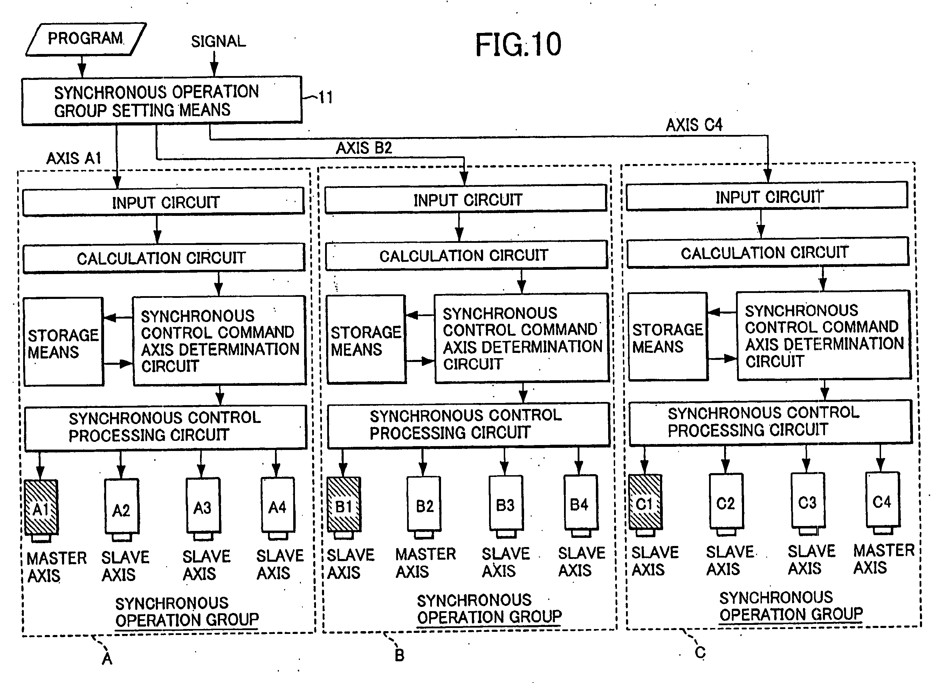

Next, a seventh embodiments of a numerical control device according to the present invention is explained with reference to Fig. 10. Fig. 10 shows only the components relating to synchronous control, among the components a numerical control device comprises, and other components are omitted from the drawing.

In the seventh embodiment, synchronous operation groups each containing a plurality of axes are set in advance, and a movement command is given to any one axis within each of the synchronous operation groups, thus performing independent synchronous control on each group.

In Fig. 10, synchronous operation group setting means 11 performs synchronous control on synchronous operation groups A, B, C. In the synchronous operation group A, the synchronous control is performed for axes A1 through A4. In the synchronous operation group B, the synchronous control is performed for axes B1 through B4. In the synchronous operation group C, the synchronous control is performed for axes C1 through C4.

It is assumed here that commands, such as speed commands, has been set for each of the axes A1, B2, C4 by means of a program or signal. The synchronous operation group setting means 11 receives the program or the signal, sends the speed command for the axis A1 to the synchronous operation group A which includes the axis A1, sends the speed command for the axis B2 to the synchronous operation group B which includes the axis B2, and sends the speed command for the axis C4 to the synchronous operation group C which includes the axis C4. Each of the synchronous operation groups A, B, C receives the speed command that was sent, and performs the synchronous control according to the above-mentioned embodiments. Each of the synchronous operation groups A, B, C can perform the synchronous control independently. According to Fig. 10, in the synchronous operation group A, the axis A1 is the master axis, and the other axes A2 through A4 are the slave axes. Furthermore, in a similarly fashion, in the synchronous operation group B, the axis B2 is the master axis and the other axes B1, B3, B4 are the slave axes. In the synchronous operation group C, the axis C4 is the master axis and the other axes C1 through C3 are the slave axes.

In each of the synchronous operation groups, the axes to be synchronously controlled are set by the information on axis to be synchronously controlled that is set in the storage means or the like. Therefore, axes to be synchronously controlled can be changed by rewriting the information on axis to be synchronously controlled, so that combinations of the axes in synchronous operation groups can be changed.

Since the structures within each synchronous operation group can be made similar to those corresponding to the first embodiment, explanations thereof are omitted here.

The technique of the present invention can be applied in machines which perform synchronous control on multiple axes, such as axes in rotating machines, packing machines, painting machines, and the like.

## Claims

1. A numerical control device provided with synchronous control means (1) for moving one or more slave axes in synchronization with a master axis, according to a movement command given to the master axis, wherein the synchronous control means (1) comprises:
synchronous control object setting means (5) for determining a plurality of axes to be synchronously controlled; and
synchronous control processing means (6) for providing a movement command to each of the axes so determined by said synchronous control object setting means (5);
**characterised by**:
synchronous control command axis determining means (4) arranged for receiving a movement command for one of said plurality of axes, said movement command being given by a processing program or by a signals, and then for setting said one axis for which said movement command is received as a master axis in said synchronous control in association with the current movement command, and also for setting the or each of said plurality of axes other than said one axis to be synchronously controlled as a slave axis in said synchronous control in association with the movement command.

2. The numerical control device according to claim 1, wherein said synchronous control processing means (6) gives said movement command given by the processing program or the signal to the said set master axis, and gives a movement command obtained by copying said movement command to the said set slave axes.

3. The numerical control device according to claim 1 or 2, further comprising synchronous control command axis switching means (7) for, when, during execution of the synchronous control, a new movement command is given to a specific single axis other than the current master axis among the plurality of axes that are the objects of synchronous control, automatically switching the master axis in the synchronous control in association with the new movement command to said specific single axis.

4. The numerical control device according to any preceding claim, further comprising synchronous/asynchronous switching means (8) for switching, by means of a processing program or a signal, between a synchronous mode for performing the synchronous control, and an asynchronous mode where the synchronous control is not performed.

5. The numerical control device according to any preceding claim, wherein said synchronous control object setting means (5) is storage means storing information for identifying a plurality of axes that are the objects of synchronous control;
said synchronous control command axis determining means (4) sets the master axis and the slave axes based on the stored information; and
said synchronous control processing means (6) automatically operates the plurality of axes that are the objects of synchronous control.

6. The numerical control device according to any of claims 1 to 4, wherein said synchronous control object setting means is means for inputting information for identifying a plurality of axes that are the objects of synchronous control;
said synchronous control command axis determining means (4) sets the master axis and the slave axes based on the inputted information; and
said synchronous control processing means (6) manually operates the plurality of axes that are the objects of synchronous control.

7. The numerical control device according to any preceding claim, further comprising synchronous operation group control means (11) for controlling a plurality of synchronous operation groups (A,B,C) containing a plurality of axes that operate synchronously,
wherein said synchronous operation group control means (11) gives the movement command to any one axis in each synchronous operation group to perform synchronous control on each synchronous operation group independently.

## Patentansprüche

1. Numerische Steuervorrichtung mit Synchron-Steuervorrichtung (1) zum Bewegen von einer oder mehreren Slave-Achsen im Gleichlauf mit einer Master-Achse, entsprechend eines Bewegungsbefehls, der der Masterachse erteilt wird, wobei die Synchron-Steuervorrichtung (1) umfasst:
Synchronsteuer-Objektstellvorrichtung (5) zum Bestimmen einer Anzahl von Achsen, die synchron gesteuert werden sollen; und
Synchronsteuer-Verarbeitungsvorrichtung (6) zum Erteilen eines Bewegungsbefehls an jede der so bestimmten Achsen durch die Synchronsteuer-Objektstellvorrichtung (5);
**gekennzeichnet durch**:
Vorrichtung zum Bestimmen der synchronen Steuerbefehlsachse (4), die so angeordnet ist, dass sie einen Bewegungsbefehl für eine der Anzahl von Achsen empfängt, wobei der Bewegungsbefehl **durch** ein Verarbeitungsprogramm oder **durch** ein Signal erteilt wird, und dann zum Einstellen der einen Achse, für die der Bewegungsbefehl erhalten wird, als Master-Achse bei der Synchronsteuerung zusammen mit dem laufenden Bewegungsbefehl; und ebenfalls zum Einstellen von der oder einer jeden der Anzahl von Achsen, die eine andere als die eine Achse ist, die bei der Synchronsteuerung zusammen mit dem Bewegungsbefehlt als Slave-Achse gesteuert werden soll.

2. Numerische Steuervorrichtung nach Anspruch 1, wobei die Synchronsteuer-Verarbeitungsvorrichtung (6) den Bewegungsbefehl, der durch das Verarbeitungsprogramm oder das Signal ausgegeben wird, an die eingestellte Master-Achse erteilt, und einen Bewegungsbefehl, der durch Kopieren des Bewegungsbefehls erhalten wird, an die eingestellten Slave-Achsen erteilt.

3. Numerische Steuervorrichtung nach Anspruch 1 oder 2, zudem umfassend:
Synchronsteuer-Befehlsachsen-Umschaltvorrichtungen (7) zum automatischen Umschalten der Masterachse in der Synchronsteuerung zusammen mit dem neuen Bewegungsbefehl zu der spezifischen einzelnen Achse, wenn während der Ausführung der Synchronsteuerung ein neuer Bewegungsbefehl an eine spezifische einzelne Achse, die eine andere als die derzeitige Master-Achse ist, aus der Anzahl von Achsen erteilt wird, die der Synchronsteuerung unterliegen.

4. Numerische Steuervorrichtung nach einem vorhergehenden Anspruch, zudem umfassend eine Synchron-Asynchron-Umschaltvorrichtung (8) zum Umschalten mit einem Verarbeitungsprogramm oder einem Signal zwischen einem synchronen Modus zum Durchführen der Synchronsteuerung und einem asynchronen Modus, bei dem keine Synchronsteuerung erfolgt.

5. Numerische Steuervorrichtung nach einem vorhergehenden Anspruch, wobei:
die Synchronsteuer-Objektstellvorrichtung (5) eine Speichervorrichtung ist, die Information zum Identifizieren einer Anzahl von Achsen speichert, die der Synchronsteuerung unterliegen,
die Synchronsteuer-Befehlsachsen-Bestimmungsvorrichtung (4) die Master- und die Slave-Achse auf der Basis der gespeicherten Information einstellt; und
die Synchronsteuer-Verarbeitungsvorrichtung (6) automatisch die Anzahl von Achsen betreibt, die der Synchronsteuerung unterliegen.

6. Numerische Steuervorrichtung nach einem der Ansprüche 1 bis 4, wobei
die Synchronsteuer-Objektstellvorrichtung eine Vorrichtung ist zum Eingeben von Information, mit der eine Anzahl von Achsen identifiziert wird, die der Synchronsteuerung unterliegen;
die Synchronsteuer-Befehlsachsen-Bestimmungsvorrichtung (4) die Master- und die Slave-Achse auf der Basis der eingegebenen Information einstellt; und
die Synchronsteuer-Verarbeitungsvorrichtung (6) manuell die Anzahl von Achsen betreibt, die der Synchronsteuerung unterliegen.

7. Numerische Steuervorrichtung nach einem vorhergehenden Anspruch, zudem umfassend eine Synchronbetriebsgruppensteuervorrichtung (11) zum Steuern einer Anzahl von synchronen Betriebsgruppen (A, B, C), die eine Anzahl von synchron arbeitenden Achsen enthalten,
wobei die Synchronbetriebsgruppensteuervorrichtung (11) den Bewegungsbefehl an eine der Achsen in jeder synchronen Betriebsgruppe erteilt, so dass die Synchronsteuerung an jeder synchronen Betriebsgruppe unabhängig erfolgt.

## Revendications

1. Appareil à commande numérique pourvu d'un moyen de commande synchrone (1) pour déplacer un ou plusieurs axes esclaves d'une manière synchronisée avec un axe maître, en accord avec une commande de déplacement transmise à l'axe maître, où le moyen de commande synchrone (1) comprend :
un moyen de réglage d'objet de commande synchrone (5) pour déterminer plusieurs axes à commander d'une manière synchronisée ; et
un moyen de traitement de commande synchrone (6) pour transmettre une commande de déplacement à chacun des axes ainsi déterminés par ledit moyen de réglage d'objet de commande synchrone (5) ;
**caractérisé par** :
ledit moyen de détermination d'axe de commande de contrôle synchrone (4) étant agencé pour recevoir une commande de déplacement pour l'un de ladite pluralité d'axes, ladite commande de déplacement étant fournie par un programme de traitement ou par un signal, et ensuite pour régler ledit axe précité pour lequel ladite commande de déplacement est reçue comme axe maître dans ladite commande synchrone en association avec la commande de déplacement courante, et également pour régler la ou chacun de ladite pluralité d'axes autre que ledit axe précité pour être commandé d'une manière synchrone comme un axe esclave dans ladite commande synchrone en association avec la commande de mouvement.

2. Appareil de commande numérique selon la revendication 1, où ledit moyen de traitement de commande synchrone (6) transmet ladite commande de déplacement fournie par le programme de traitement ou le signal audit axe maître réglé, et transmet une commande de déplacement obtenue en copiant ladite commande de déplacement auxdits axes esclaves réglés.

3. Appareil à commande numérique selon la revendication 1 ou 2, comprenant en outre un moyen de commutation d'axe de commande de contrôle synchrone (7) pour, lorsque pendant l'exécution de la commande synchrone, une nouvelle commande de déplacement est transmise à un axe unique spécifique autre que l'axe maître courant parmi la pluralité d'axes qui constituent les objets de la commande synchrone, commuter automatiquement l'axe maître dans la commande synchrone en association avec la nouvelle commande de mouvement audit axe unique spécifique.

4. Appareil à commande numérique selon l'une des revendications précédentes, comprenant en outre un moyen de commutation synchrone/asynchrone (8) pour commuter, au moyen d'un programme de traitement ou d'un signal, entre un mode synchrone pour exécuter la commande synchrone et un mode asynchrone où la commande synchrone n'est pas exécutée.

5. Appareil à commande numérique selon l'une des revendications précédentes, où ledit moyen de réglage d'objet de contrôle synchrone (5) est un moyen de stockage stockant des informations pour identifier plusieurs axes qui constituent l'objet de la commande synchrone ;
ledit moyen de détermination d'axe de commande de contrôle synchrone (4) établit l'axe maître et les axes esclaves sur la base des informations stockées ; et
ledit moyen de traitement de commande synchrone (6) fait fonctionner automatiquement plusieurs axes qui constituent l'objet de la commande synchrone.

6. Appareil à commande numérique selon l'une des revendications 1 à 4, où ledit moyen de réglage d'objet de commande synchrone est prévu pour entrer des informations pour identifier plusieurs axes qui constituent les objets de la commande synchrone ;
ledit moyen de détermination d'axe de commande de contrôle synchrone (4) établit l'axe maître et les axes esclaves sur la base des informations entrées ; et
ledit moyen de traitement de commande synchrone (6) fait fonctionner manuellement la pluralité d'axes qui constituent les objets de la commande synchrone.

7. Appareil à commande numérique selon l'une des revendications précédentes, comprenant en outre un moyen de commande de groupes d'opérations synchrones (11) pour commander plusieurs groupes d'opérations synchrones (A, B, C) contenant une pluralité d'axes qui fonctionnent d'une manière synchronisée,
où ledit moyen de commande de groupes d'opérations synchrones (11) transmet la commande de déplacement à l'un quelconque des axes dans chaque groupe d'opérations synchrones pour exécuter une commande synchrone sur chaque groupe d'opérations synchrones indépendamment.
